# EUROPEAN PATENT SPECIFICATION

(11) **EP 3 399 856 B1**
(45) Date of publication and mention of the grant of the patent: **04.09.2024**
(21) Application number: 17736276.1
(22) Date of filing: 04.01.2017
(51) Int. Cl.: A01K 5/00, A01K 7/00, A01K 5/01

(54) **TRAVELING FEEDING APPARATUS**
FÜTTERVORRICHTUNG FÜR REISEN
APPAREIL DE VOYAGE DESTINÉ À L'ALIMENTATION DES ANIMAUX

(30) Priority: 04.01.2016 US 201614987092
(43) Date of publication of application: 14.11.2018
(73) Proprietor: Loving Pets Corporation, Cranbury Township, NJ 08512 (US); Gravity Product Development, LLC, Golden, CO 80403 (US)
(72) Inventor: ABBEY, Eric, East Brunswick, NJ 08816 (US); STONE, John James, Golden, CO 80401 (US)
(74) Representative: Haseltine Lake Kempner LLP
(86) International application number: PCT/US2017/012212
(87) International publication number: WO 2017/120255

(56) References cited:
- US-A- 5 636 594
- US-A1- 2007 251 874
- US-A1- 2009 199 775
- US-A1- 2014 261 203
- US-A1- 2014 261 203
- US-B1- 6 443 096
- US-S- D 665 541

## Description

This application claims priority to U.S. Application No. 14/987,092, filed January 4, 2016.

### BACKGROUND OF THE INVENTIVE FIELD

The present invention is directed to a portable feeding apparatus or bowl, more particularly to a travel feeding apparatus having a collapsible bowl for food and water with fold out legs.

Although collapsible feeding bowls are known in the art, the present invention is novel in that it provides a unique combination of features that provides a portable dual-bowl feeding/drinking apparatus while also allowing for the storage and transport of food and/or water or other liquids. The present invention provides for a highly flexible, compactable and convenient apparatus for storing food/liquid, carrying food/liquid, and feeding not previously known in the art. A close prior art document is US2014/261203 A1, which is a pet dual-bowl apparatus, connected by a hinge.

### SUMMARY OF THE GENERAL INVENTIVE CONCEPT

The present invention relates to a portable feeding apparatus as set out in claim 1 below.

Optional features of the invention are set out in the dependent claims below.

The collapsible feeding bowl of the present invention can also be configured with fold out legs that fold into the rim or frame around the bowl or bowls (depending on whether there is one bowl or two bowls). The legs are preferably in a curved shape corresponding to the shape of the bowl rim or frame. The legs preferably fold into a groove or indent portion of the bowl rim or frame.

The foregoing and other features and advantages of the present invention will be apparent from the following more detailed description of the particular embodiments, as illustrated in the accompanying drawings.

### BRIEF DESCRIPTION OF THE DRAWINGS

The following detailed description of the example embodiments refers to the accompanying figures that form a part thereof. The detailed description provides explanations by way of exemplary embodiments.

In addition to the features mentioned above, other aspects of the present invention will be readily apparent from the following descriptions of the drawings and exemplary embodiments, wherein like reference numerals across the several views refer to identical or equivalent features, and wherein:
FIG. 1 illustrates one embodiment of the portable feeding apparatus of the present invention;
FIG. 2 illustrates the feeding apparatus of Figure 1 in the closed and collapsed position and having a slide lock;
FIG. 3 illustrates the feeding apparatus of Figure 1 in the closed position where one of the bowls is in the collapsed position and the other bowl is in the expanded position;
FIG. 4 illustrates a cross-section view of the bowl of FIG. 3;
FIG. 5 illustrates one embodiment of the hinged lock;
FIG. 6 illustrates one embodiment of the molded lock;
FIG. 7 illustrates a close-up view of the stop mechanism;
FIG. 8 illustrates a cross-section view of the stop mechanism of FIG. 7;
FIG. 9 illustrates the feeding apparatus of FIG. 1 with a lid over one bowl portion;
FIG. 10 illustrates the fold-out legs on a dual bowl configuration;
FIG. 11 illustrates the fold-out legs on a single bowl configuration which does not form part of the claimed invention.

### DETAILED DESCRIPTION OF EXEMPLARY EMBODIMENT(S)

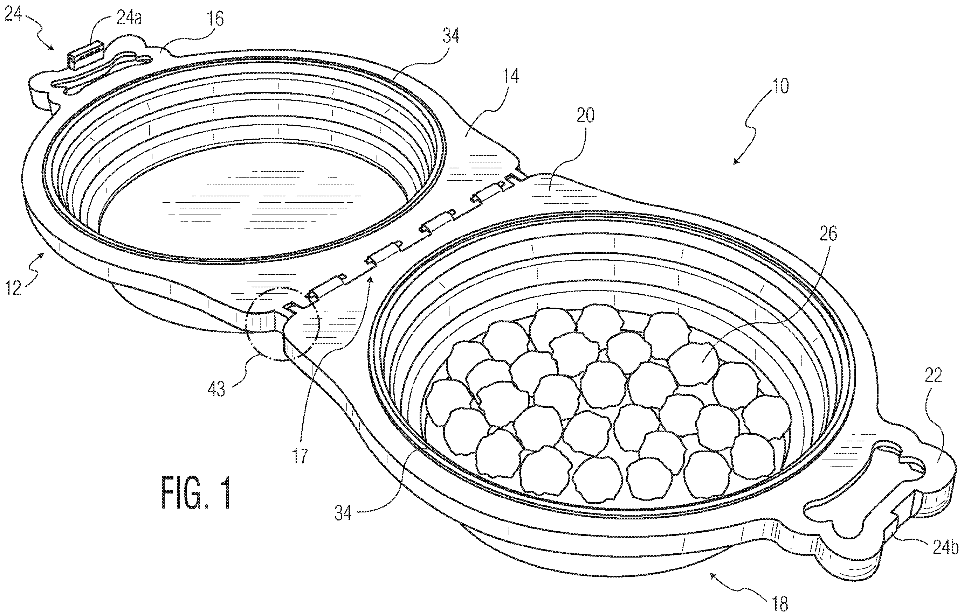

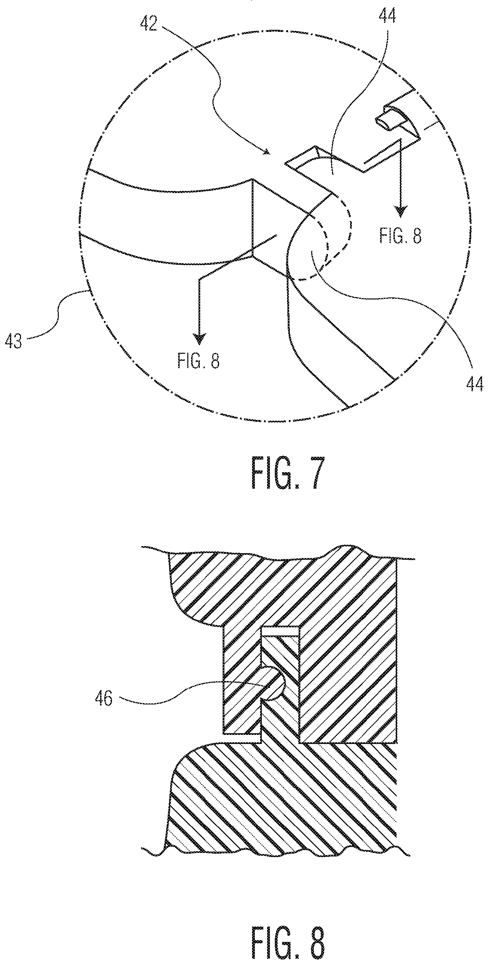

FIG. 1 illustrates one embodiment of the portable feeding apparatus **10** of the present invention. The present invention relates to a portable, traveling feeding apparatus, comprised of a first collapsible bowl **12,** the first collapsible bowl supported by a frame portion **14** and a handle **16,** hinged **17** to a second collapsible bowl **18,** the second collapsible bowl supported by a frame portion **20** and a handle **22.** The portable apparatus of the present invention has a lock or fastener portion **24** for holding the first and second bowls in the closed position. Reference numeral **43** refers to the dotted circle portion that is blown up as Figure 7.

The portable feeding apparatus of the present invention preferably has one bowl for holding food and the other bowl for holding water. The first and second bowl portions can be moved from a closed position to an expanded position when in use. FIG.1 shows the bowls in open-hinged position with the bowls expanded ready for use. Food, shown generally at **26,** can be placed in one of the bowls and water can be placed in the other bowl, for example.

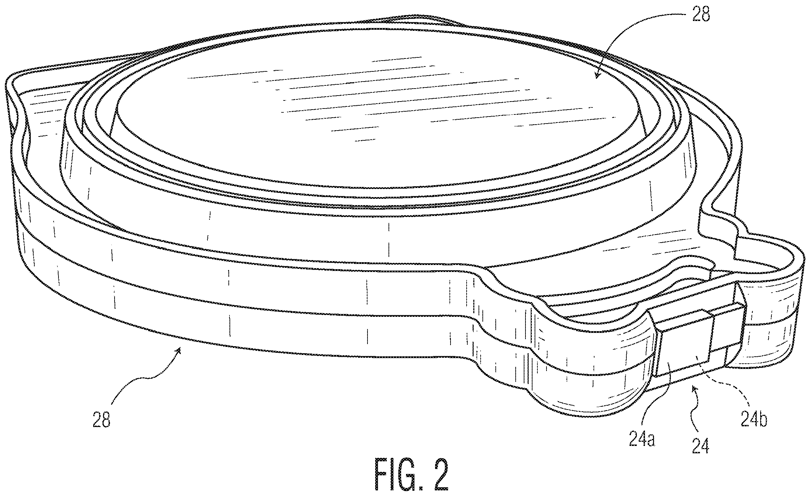

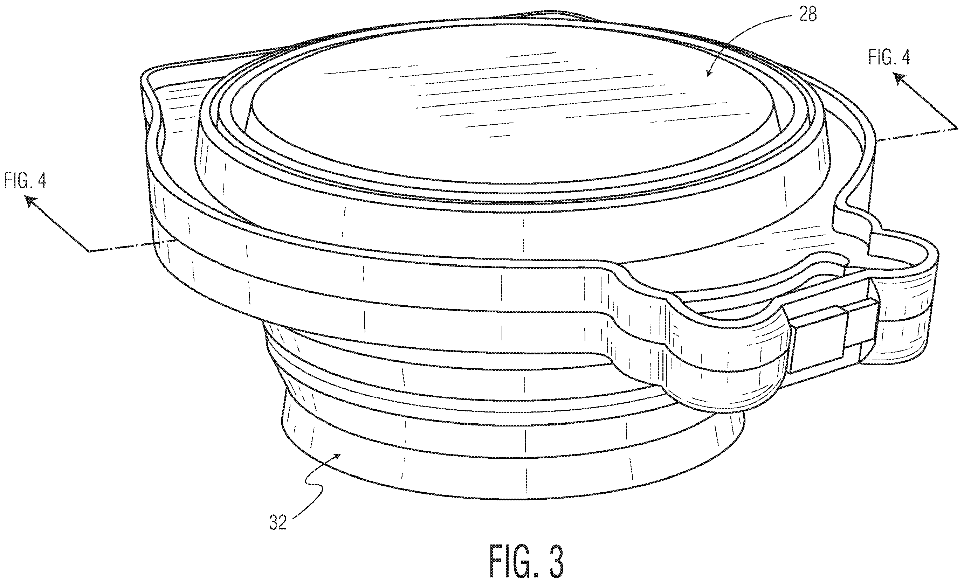

In the preferred embodiment, the diameters of the bowls are the same size so that the openings of the bowls mate with each other when the apparatus is in the closed position. Thus, when in the closed position, the rims and/or frames of each of the bowls are disposed against each other thus forming a seal to lock in the contents of the bowl in the apparatus. For example, see FIGS. 2 and 3 showing the frames/rims disposed against each other when the apparatus is in the closed position so that any contents in the bowl portions are sealed in the apparatus.

FIG. 2 illustrates the feeding apparatus of Figure 1 in the closed and collapsed position and having a slide lock **24a, 24b.** In this figure, both bowls are placed in the collapsed position (shown generally at **28**) for traveling or storage as the bowls take up less space when in the collapsed position. As illustrated, the first and second collapsible bowls have openings that are disposed next to each other when the apparatus is in the closed position. With the hinge in the closed position and the bowls in the collapsed position (e.g., storage state), the portable feeding apparatus of the present invention can be stored in a fairly small space, e.g., in a cupboard, drawer, or traveling bag.

In this embodiment, the handle is comprised of two half portions **16, 22** - each half attached to one of the bowl portions respectively. When the feeding apparatus is closed, both halves of the handle come together to form the complete handle. The slide lock is comprised of a slide portion **24a** on one of the halves of the handle that the user can slide over a matching protrusion piece **24b** on the other half of the handle to lock the apparatus in the closed position.

FIG. 3 illustrates the feeding apparatus of Figure 1 in the closed position where one of the bowls is in the collapsed position and the other bowl is in the expanded position. In this closed position, the lock can be positioned to hold the feeding apparatus in the closed position. In this closed position, with one of the bowls in the expanded position (shown generally at **32**), food can be stored in the apparatus. For example, pet food can be stored in the expanded bowl for traveling purposes. When the user is ready to feed the pet (for example at a rest stop at a highway), the user can then open the feeding apparatus, expand the other bowl and place water in it. In this way, the feeding apparatus of the present invention can be used as a food storage and carrying device.

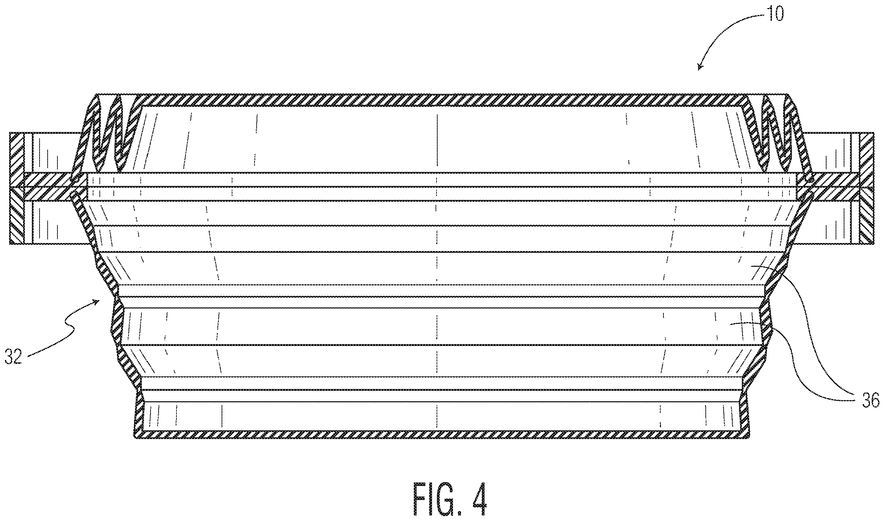

FIG. 4 illustrates a cross-section view of the bowl of FIG. 3. It is appreciated that one of ordinary skill in the art would understand how to configure the bowls to provide the ability to collapse or expand the bowl. For example, as illustrated, in this embodiment the bowls are comprised of flexible, plastic or elastomeric membranes **36** that permit the collapsing or "squishing" of the bowls. As illustrated, the bowls are comprised of stacked layers of these annular shaped rings that have diameters that decrease in size allowing the bowls to be collapsed and expanded as needed.

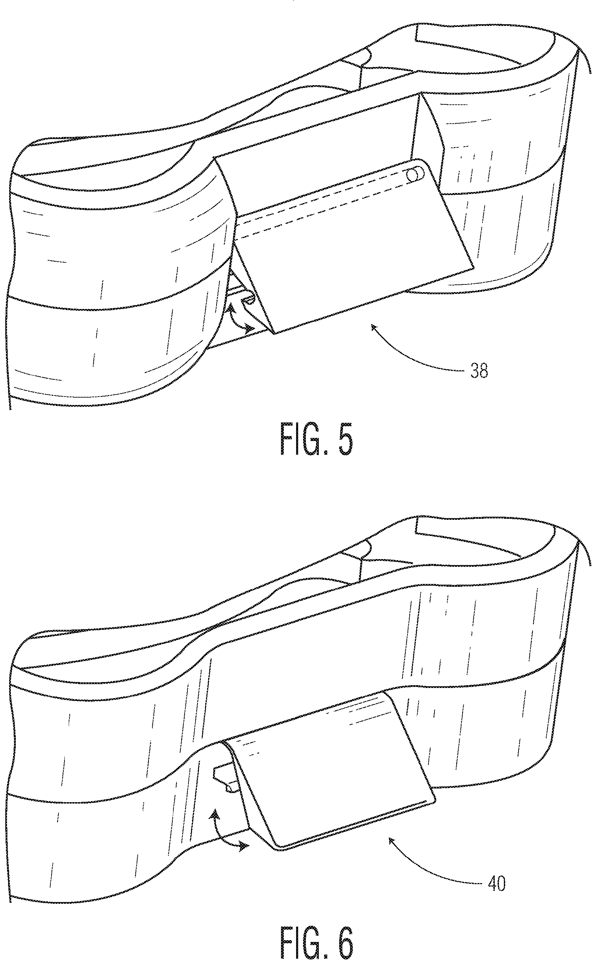

Once the portable feeding apparatus of the present invention is closed, the lock portion can be locked to keep it in the closed position. FIG. 5 illustrates one alternate embodiment showing a hinged lock **38.** FIG. 6 illustrates another alternate embodiment showing a molded lock **40.** "Fastener" or "lock" as used herein means the ability to keep the apparatus in the closed position (e.g., the bowls are held shut) until it is undone and should not be so narrowly construed to be limited to a "key-type" lock.

FIG. 7 illustrates a close-up view of one embodiment of the stop mechanism **42** of the present invention. FIG. 8 illustrates a cross-section view of the stop mechanism of FIG. 7. In this embodiment, this stop mechanism is comprised of interlocking members **44** of the frame portions of the first and second bowl portions, respectively. One of the interlocking members of the stop mechanism has a small bump, protrusion or member **46** (e.g., in a rounded "ball" shape) with a matching socket molded for accepting a ball, bump or protrusion member. In the preferred embodiment, there are two stop mechanisms, placed just outside to the right and left of the hinge portions. These stop mechanisms create a "click" and locking effect so that when the portable feeding apparatus is opened for use, the bump will "click" into the socket and the apparatus will be held in the open position and will resist the hinge's natural instinct to fold. To close the portable bowl, a user would grab both halves (i.e., first and second bowl sections) and apply a slight pressure to get the ball to release from the socket on either side in order to fold the portable bowl back up to the closed position.

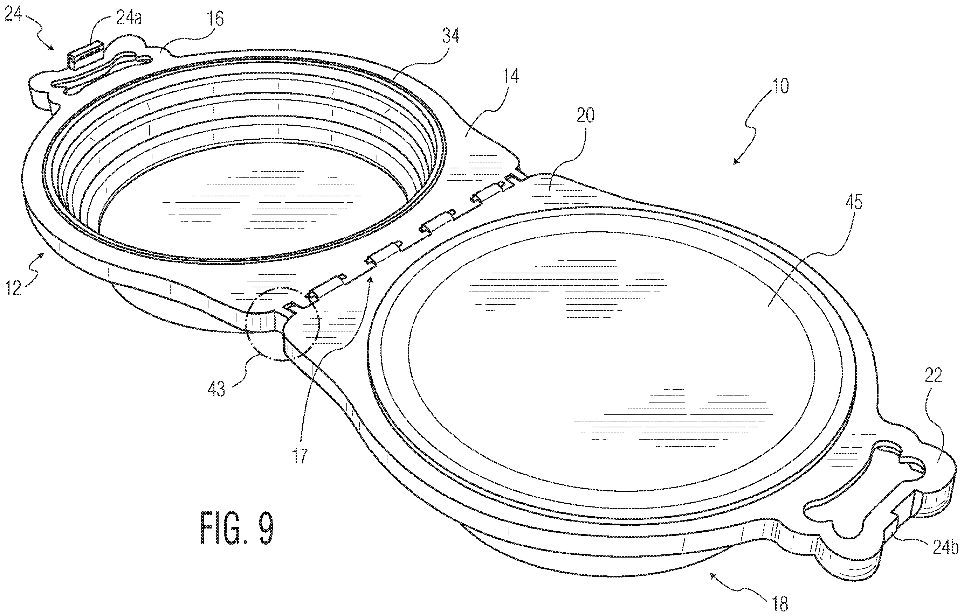

In an alternate embodiment, lids can be provided for one or both bowls to keep food or water stored in the bowls from spilling out. In this embodiment, water and food can be stored and carried in the portable feeding apparatus of the present invention. In one embodiment, the lids are plastic and can be securely held in place by each of the rims **34** of the bowls, respectively. FIG. 9 illustrates the feeding apparatus of FIG. 1 with a lid **45** over one bowl portion.

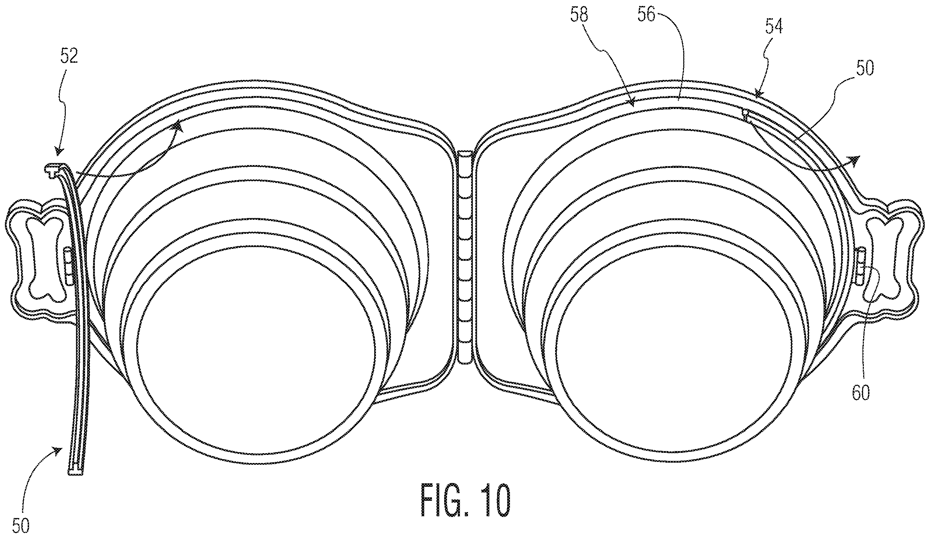

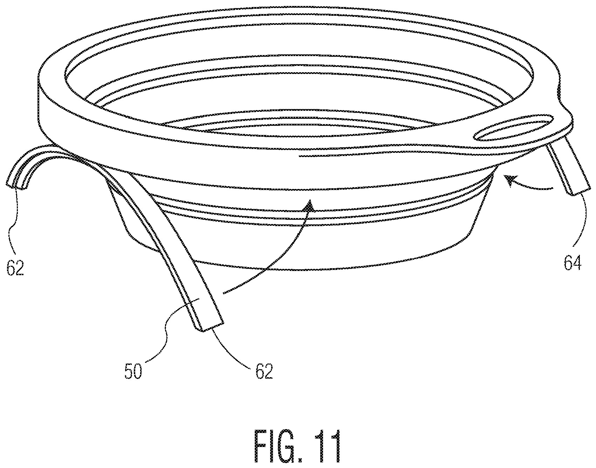

The collapsible feeding bowl of the present invention can be configured with fold out legs that fold into the rim or frame around the bowls. FIG. 10 and FIG. 11 illustrate the fold-out legs of the bowl of the present invention. FIG. 10 illustrates a bottom view of the fold-out legs **50** on a dual bowl figuration. FIG. 11 illustrates the fold-out legs on a single bowl configuration which does not form part of the claimed invention. In FIG. 10 one of the legs is shown in a folded-out position (shown generally at **52**) and one leg is shown in a folded-in position (shown generally at **54**). The legs are preferably in a curved shape corresponding to the shape of the bowl rim or frame (shown generally at **58**). The legs preferably fold into a groove or indent portion **56** of the bowl rim or frame. The legs are preferably attached at a hinged portion **60** to allow the legs to fold in and out.

In one embodiment, the first leg is comprised of a first and second end **62;** and the second leg is comprised of a first and second end **64.** The first and second ends of the first and second legs can be configured with rubber stops to prevent the bowl from sliding on a slippery floor.

While certain embodiments of the present invention are described in detail above, the scope of the invention is not to be considered limited by such disclosure, and modifications are possible without departing from the scope of the following claims:

## Claims

1. A portable feeding apparatus (10), comprising:
a first collapsible bowl (12) having a rim, wherein the rim has an indent portion;
a second collapsible bowl (18) having a rim, wherein the rim has an indent portion;
a first leg (50) hingedly attached to the apparatus for folding in and out of the indent portion in the rim of the first collapsible bowl;
a second leg hingedly attached to the apparatus for folding in and out of the indent portion in the rim of the second collapsible bowl;
a hinge for hingably connecting the first and second collapsible bowls together;
a fastener (24) for holding the first and second collapsible bowls to each other when the feeding apparatus is in a closed position;
a handle (16 or 22) operationally connected to at least one bowl for carrying the apparatus;
wherein the first and second collapsible bowls are adapted to be expanded to hold food or water and collapsed to conserve space;
wherein the feeding apparatus is adapted to be opened for feeding use and closed when not in use; and
wherein the first and second collapsible bowls have openings and wherein the openings of the first and second collapsible bowls are disposed next to each other when the feeding apparatus (10) is in the closed position to form a seal to lock in contents of at least one of the bowls for storage when that bowl is in the expanded position.

2. A portable feeding apparatus (10) according to claim 1, where the handle (16 or 22) is directly connected to one of the bowls.

3. A portable feeding apparatus (10) according to claim 1, further comprising:
a stop mechanism (42) for holding the apparatus in a predetermined open position for use.

4. A portable feeding apparatus (10) according to claim 1, wherein the fastener (24) is a sliding fastener.

5. A portable feeding apparatus (10) according to claim 1, wherein the fastener (24) is a hinged fastener.

6. A portable feeding apparatus (10) according to claim 1, wherein the apparatus is adapted so that one of the bowls can be expanded while the other bowl is collapsed; and
wherein food or water can be stored in the apparatus with the apparatus closed and locked.

7. A portable feeding apparatus (10) according to claim 1, wherein the first and second legs (50) are in a curved shape corresponding to the shape of the rims of the first and second bowls.

8. A portable feeding apparatus (10) according to claim 1, wherein the feeding apparatus (10) is adapted to store food or water when the apparatus is closed and wherein one of the bowls is in the expanded position.

## Patentansprüche

1. Tragbare Füttervorrichtung (10), Folgendes umfassend:
eine erste zusammenlegbar Schale (12) mit einem Rand, wobei der Rand einen Abschnitt mit einer Vertiefung aufweist;
eine zweite kollabierbare Schale (18) mit einem Rand, wobei der Rand einen Abschnitt mit einer Vertiefung aufweist;
einen ersten Schenkel (50), der gelenkig an der Vorrichtung befestigt ist, um in die Vertiefung im Rand der ersten kollabierbaren Schale ein- und auszuklappen;
einen zweiten Schenkel, der gelenkig an der Vorrichtung befestigt ist, um in die Vertiefung im Rand der zweiten kollabierbaren Schale ein- und auszuklappen;
ein Scharnier zum gelenkigen Verbinden der ersten und zweiten kollabierbaren Schale miteinander;
ein Befestigungselement (24) zum Halten der ersten und zweiten kollabierbaren Schale aneinander, wenn sich die Fütterungsvorrichtung in einer geschlossenen Position befindet;
einen Griff (16 oder 22), der mit mindestens einer Schale zum Tragen der Vorrichtung wirkverbunden ist;
wobei die erste und die zweite zusammenlegbare Schale so ausgelegt sind, dass sie zum Fassen von Nahrungsmitteln oder Wasser erweitert und zur Platzersparnis zusammengelegt werden können;
wobei die Fütterungsvorrichtung so ausgelegt ist, dass sie zum Füttern geöffnet und bei Nichtgebrauch geschlossen werden kann; und
wobei die erste und die zweite kollabierbare Schale Öffnungen aufweisen und wobei die Öffnungen der ersten und der zweiten kollabierbaren Schale nebeneinander angeordnet sind, wenn sich die Fütterungsvorrichtung (10) in der geschlossenen Position befindet, um eine Dichtung zu bilden, um den Inhalt von zumindest einer der Schalen zur Aufbewahrung einzuschließen, wenn sich diese Schale in der expandierten Position befindet.

2. Tragbare Füttervorrichtung (10) nach Anspruch 1, wobei der Griff (16 oder 22) direkt mit einer der Schalen verbunden ist.

3. Tragbare Füttervorrichtung (10) nach Anspruch 1, ferner umfassend:
einen Anschlagmechanismus (42) zum Halten der Vorrichtung in einer vorbestimmten offenen Stellung für den Gebrauch.

4. Tragbare Füttervorrichtung (10) nach Anspruch 1, wobei das Befestigungselement (24) ein gleitendes Befestigungselement ist.

5. Tragbare Füttervorrichtung (10) nach Anspruch 1, wobei das Befestigungselement (24) ein Gelenkverschluss ist.

6. Tragbare Füttervorrichtung (10) nach Anspruch 1, wobei die Vorrichtung so eingerichtet ist, dass eine der Schalen expandiert werden kann, während die andere Schale kollabiert ist; und
wobei bei geschlossener und verriegelter Vorrichtung Nahrungsmittel oder Wasser in der Vorrichtung aufbewahrt werden können.

7. Tragbare Füttervorrichtung (10) nach Anspruch 1, wobei der erste und der zweite Schenkel (50) eine gekrümmte Form aufweisen, die der Form des Rands der ersten und zweiten Schale entspricht.

8. Tragbare Füttervorrichtung (10) nach Anspruch 1, wobei die Fütterungsvorrichtung (10) zur Aufbewahrung von Nahrungsmitteln oder Wasser ausgelegt ist, wenn die Vorrichtung geschlossen ist und sich eine der Schalen in der expandierten Position befindet.

## Revendications

1. Appareil d'alimentation portable (10), comprenant :
un premier bol pliable (12) présentant un rebord, dans lequel le rebord présente une partie en retrait ;
un second bol pliable (18) présentant un rebord, dans lequel le rebord présente une partie en retrait ;
un premier pied (50) fixé de manière articulée à l'appareil pour se replier dans et hors de la partie en retrait dans le rebord du premier bol pliable ;
un second pied fixé de manière articulée à l'appareil pour se replier dans et hors de la partie en retrait dans le rebord du second bol pliable ;
une charnière pour relier de manière articulée les premier et second bols pliables ensemble ;
une attache (24) pour maintenir les premier et second bols pliables ensemble lorsque l'appareil d'alimentation est dans une position fermée ;
une poignée (16 ou 22) reliée fonctionnellement à au moins un bol pour transporter l'appareil ;
dans lequel les premier et second bols pliables sont adaptés pour être déployés pour contenir de la nourriture ou de l'eau et repliés pour économiser de l'espace ;
dans lequel l'appareil d'alimentation est adapté pour être ouvert pour une utilisation alimentaire et fermé lorsqu'il n'est pas utilisé ; et
dans lequel les premier et second bols pliables présentent des ouvertures et dans lequel les ouvertures des premier et second bols pliables sont disposées l'une à côté de l'autre lorsque l'appareil d'alimentation (10) est en position fermée pour former un joint pour verrouiller le contenu d'au moins l'un des bols pour le stockage lorsque ce bol est en position déployée.

2. Appareil d'alimentation portable (10) selon la revendication 1, où la poignée (16 ou 22) est directement reliée à l'un des bols.

3. Appareil d'alimentation portable (10) selon la revendication 1, comprenant également :
un mécanisme d'arrêt (42) pour maintenir l'appareil dans une position ouverte prédéterminée pour son utilisation.

4. Appareil d'alimentation portable (10) selon la revendication 1, dans lequel l'attache (24) est une attache coulissante.

5. Appareil d'alimentation portable (10) selon la revendication 1, dans lequel l'attache (24) est une attache articulée.

6. Appareil d'alimentation portable (10) selon la revendication 1, dans lequel l'appareil est adapté de sorte que l'un des bols peut être déployé tandis que l'autre bol est replié ; et
dans lequel de la nourriture ou de l'eau peuvent être stockées dans l'appareil tandis que l'appareil est fermé et verrouillé.

7. Appareil d'alimentation portable (10) selon la revendication 1, dans lequel les premier et second pieds (50) ont une forme incurvée correspondant à la forme des rebords des premier et second bols.

8. Appareil d'alimentation portable (10) selon la revendication 1, dans lequel l'appareil d'alimentation (10) est adapté pour stocker de la nourriture ou de l'eau lorsque l'appareil est fermé et dans lequel l'un des bols est en position déployée.
